# EUROPÄISCHE PATENTSCHRIFT

(11) **EP 4 033 641 B1**
(45) Veröffentlichungstag und Bekanntmachung des Hinweises auf die Patenterteilung: **29.01.2025**
(21) Anmeldenummer: 21215233.4
(22) Anmeldetag: 16.12.2021
(51) Int. Cl.: H02K 1/18, H02K 11/01, H02K 3/04, H02K 3/46

(54) **STATOR FÜR EINEN/EINE PERMANENTERREGTEN ELEKTROMOTOR/DREHFELDMASCHINE**
STATOR FOR A PERMANENTLY EXCITED ELECTRIC MOTOR / ROTATING FIELD MACHINE
STATOR POUR UN MOTEUR ÉLECTRIQUE / UNE MACHINE DE CHAMP ROTATIVE À EXCITATION PERMANENTE

(30) Priorität: 20.01.2021 DE 102021101162
(43) Veröffentlichungstag der Anmeldung: 27.07.2022
(73) Patentinhaber: ebm-papst Mulfingen GmbH & Co. KG, 74673 Mulfingen (DE)
(72) Erfinder: BAUN, Martin, 74673 Mulfingen (DE); Mezger, Sebastian, 74653 Ingelfingen (DE)
(74) Vertreter: Staeger & Sperling Partnerschaftsgesellschaft mbB

(56) Entgegenhaltungen:
- DE-C2- 4 404 585
- JP-A- S5 970 154

## Beschreibung

Die Erfindung betrifft einen Stator für einen/eine permanenterregten Elektromotor/Drehfeldmaschine mit einem Blechpaket aus Statorblechen und einer Jochwicklung.

Üblicherweise werden für hochdrehende elektrische Motoren wie permanentmagneterregte Synchronmaschinen oder Asynchronmaschinen überlappende Wicklungssysteme eingesetzt. Die bei hohen Drehzahlen notwendigen kleinen Spulenwindungszahlen führen allerdings zu geringen Induktivitäten. Infolgedessen entstehen unerwünschte Oberschwingungen im Strangstrom, woraus erhöhte Rotorverluste resultieren. Diese Verluste können dabei derart groß werden, dass Gegenmaßnahmen notwendig sind. Entsprechende Gegenmaßnahmen sind typischerweise passive Tiefpassfilter, welche auf Spulen und Kondensatoren basieren. Nachteilig an diesen Lösungen ist, dass in der Regel ein vergleichsweise großer Bauraumbedarf benötigt wird.

Ein anderer Ansatz für Gegenmaßnahmen ist die Verwendung eines Mehr-Level-Umrichters, dessen Komplexität jedoch gegenüber dem üblicherweise verwendeten Umrichter stark erhöht ist und woraus ebenfalls ein größerer Platzbedarf resultiert.

Aus den Dokumenten JP S59 70154 A und DE 44 04 585 C2 sind beispielsweise Statoren für Elektromotoren bekannt, bei welchen nichtmagnetische Verbindungselemente zwischen Statorblech und weichmagnetischen Schirm verwendet werden.

Es ist daher Aufgabe der vorliegenden Erfindung, einen Stator für einen/eine permanenterregten Elektromotor/Drehfeldmaschine mit einem Blechpaket aus Statorblechen und einer Jochwicklung bereitzustellen, bei welchem/welcher ein Betrieb an einem Pulswechselrichter bei einer hohen Drehzahl mit reduzierten Rotorverlusten ohne stromglättende Zusatzmaßnahmen möglich ist.

Diese Aufgabe wird durch die Merkmalskombination gemäß Patentanspruch 1 gelöst.

Erfindungsgemäß wird ein Stator für einen/eine permanenterregten Elektromotor/Drehfeldmaschine mit einem Blechpaket aus Statorblechen und einer Jochwicklung vorgeschlagen. Die Jochwicklung umfasst einen inneren Wicklungsteil, welcher radial innerhalb des Statorblechs in wenigstens einer Wicklungsaufnahme angeordnet ist, und einen äußeren Wicklungsteil, welcher radial außerhalb des Statorblechs an einer Außenoberfläche des Blechpakets angeordnet ist. Darüber hinaus ist um den äußeren Wicklungsteil vollumfänglich ein weichmagnetischer Schirm ausgebildet. Zwischen dem Statorblech und dem weichmagnetischen Schirm ist ferner wenigstens ein nichtmagnetisches Verbindungselement angeordnet, welches das Statorblech und den weichmagnetischen Schirmring insbesondere kontaktiert.

Vorteilhaft daran ist, dass die Verbindung zwischen dem Statorblechpaket und dem Schirmring des jochbewickelten Stators dabei über ein nicht magnetisch leitfähiges Verbindungsteil gelöst wird. Diese Paarung erhöht die Streuinduktivität und verhindert dabei außerdem den unerwünschten magnetischen Kurzschluss zwischen diesen beiden Bauteilen.

In einer bevorzugten Ausführungsform der Erfindung ist das Blechpaket einstückig ausgebildet. Auf diese Weise sind Induktivität und Bauteilfestigkeit des Blechpakets des Stators optimiert.

Gattungsbildende Statoren im vorliegenden technischen Gebiet sind üblicherweise derart ausgebildet, dass der innere Wicklungsteil und der äußere Wicklungsteil über einen Statorrückschluss miteinander verbunden sind. Dies ist eine Voraussetzung für eine Jochwicklung, wobei ein Statorrückschluss auch als Joch bezeichnet wird.

Erfindungsgemäß ist vorgesehen, dass das wenigstens eine nichtmagnetische Verbindungselement aus Kunststoff ist und jeweils ein nichtmagnetisches Verbindungselement zwischen benachbarten Wicklungspolen der Jochwicklung angeordnet ist. Dabei ist günstig, dass ein Verbindungselement aus Kunststoff die Anforderungen hinsichtlich einer nichtmagnetischen Leitfähigkeit erfüllt sowie einfach Herzustellen und dabei optimal an die Geometrie des Statorblechs anpassbar ist.

Ferner ist vorgesehen, dass das jeweilige nichtmagnetische Verbindungselement beabstandet von den jeweiligen benachbarten Wicklungspolen der Jochwicklung angeordnet ist. Dadurch wird mittels einer materialsparenden Lösung die gewünschte Wirkung eines nichtmagnetischen Verbindungselements erreicht.

In einer alternativen nicht erfindungsgemäßen Ausführungsform des vorliegenden Stators ist vorgesehen, dass das wenigstens eine nichtmagnetische Verbindungselement ein Verguss ist, welcher über den äußeren Wicklungsteil ausgebildet ist. Vorteilhaft daran ist, dass der Verguss vollumfänglich zwischen dem Statorblech und dem Schirmring ausgebildet ist, wodurch neben der nichtmagnetischen Verbindung ferner das Statorblech vor Feuchtigkeit, Staub, Verunreinigung, Temperatureinflüssen, Erschütterung und Berührung geschützt und eine elektrische Isolation bereitgestellt ist.

In einer weiteren vorteilhaften Ausführung ist vorgesehen, dass die wenigstens eine Wicklungsaufnahme als eine Nut ausgebildet ist. Auf diese Weise ist eine Zahnspulenwicklung der Jochwicklung umsetzbar.

In einem Ausführungsbeispiel der Erfindung ist vorgesehen, dass die Jochwicklung 6-polig bzw. 6-nutig ausgebildet ist. In einer weiteren vorteilhaften Ausführungsform des Stators ist die Jochwicklung 12-polig bzw. 12-nutig ausgebildet. Die vorstehenden Ausführungsvarianten der Jochwicklung weisen optimale Eigenschaften hinsichtlich der Anwendung des Stators in einer/einem Drehfeldmaschine/permanenterregten Elektromotor auf.

Erfindungsgemäß wird ferner eine/ein Drehfeldmaschine/permanenterregter Elektromotor mit einem Stator entsprechend der vorstehenden Offenbarung vorgeschlagen, bei welchem innerhalb des Statorblechs ein Rotor mit Permanentmagneten angeordnet ist. Auf diese Weise ist die/der Drehfeldmaschine/permanenterregte Elektromotor funktionsfähig umgesetzt.

In einer bevorzugten Ausführungsform der/des Drehfeldmaschine/permanenterregten Elektromotors, ist diese/dieser direkt an einem 2-Stufen-Wechselrichter angeschlossen. Aufgrund der vergrößerten Induktivität durch den erfindungsgemäßen Stator der/des Drehfeldmaschine/permanenterregten Elektromotors sind die Oberschwingungen im Strom reduziert, sodass der Motor ohne Zusatzmaßnahmen direkt an einem 2-Level-Wechselrichter betreibbar ist. Dementsprechend ist die Anwendung eines vorgeschalteten Filters oder der Betrieb an einem aufwändigen Multi-Level-Umrichter obsolet.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine schematische Schnittansicht einer/eines Drehfeldmaschine/permanenterregten Elektromotors mit einem Rotor und einem 6-poligen bzw. 6-nutigen Stator umfassend einen weichmagnetischen Schirm und ein nichtmagnetisches Verbindungselement,
- Fig. 2: eine weitere schematische Schnittansicht einer/eines Drehfeldmaschine/permanenterregten Elektromotors mit einem Rotor und einem 6-poligen bzw. 6-nutigen Stator umfassend einen weichmagnetischen Schirm und ein nichtmagnetisches Verbindungselement,
- Fig. 3: eine schematische Schnittansicht einer/eines Drehfeldmaschine/permanenterregten Elektromotors mit einem Rotor und einem 12-poligen bzw. 12-nutigen Stator umfassend einen weichmagnetischen Schirm und ein nichtmagnetisches Verbindungselement,
- Fig. 4: eine weitere schematische Schnittansicht einer/eines Drehfeldmaschine/permanenterregten Elektromotors mit einem Rotor und einem 6-poligen bzw. 6-nutigen Stator umfassend einen weichmagnetischen Schirm und ein nichtmagnetisches Verbindungselement und
- Fig. 5: eine weitere schematische Schnittansicht einer/eines Drehfeldmaschine/permanenterregten Elektromotors mit einem Rotor und einem 12-poligen bzw. 12-nutigen Stator umfassend einen weichmagnetischen Schirm und ein nichtmagnetisches Verbindungselement.

Die Figuren sind beispielhaft schematisch. Gleiche Bezugszeichen in den Figuren weisen auf gleiche funktionale und/oder strukturelle Merkmale hin.

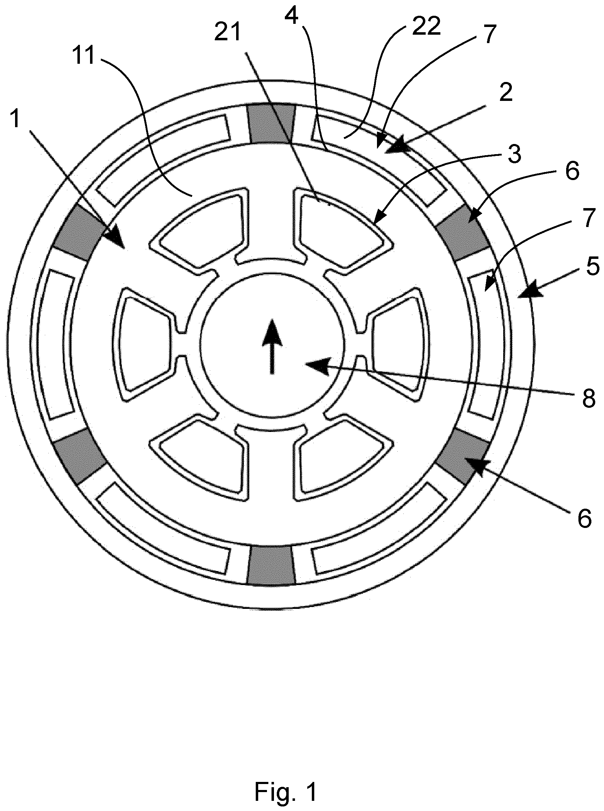

In Figur 1 ist eine schematische Schnittansicht einer/eines Drehfeldmaschine/permanenterregten Elektromotors mit einem Rotor 8 und einem 6-poligen bzw. 6-nutigen Stator umfassend einen weichmagnetischen Schirm 5 und ein nichtmagnetisches Verbindungselement 6 offenbart. Der Stator des/der permanenterregten Elektromotors/Drehfeldmaschine umfasst ein Blechpaket 1 aus Statorblechen 11 sowie eine 6-polig bzw. 6-nutig ausgebildete Jochwicklung 2. Außerdem ist das Blechpaket 1 einstückig ausgebildet.

Des Weiteren umfasst der Rotor 8 Permanentmagneten und ist innerhalb des Statorblechs 11 angeordnet. Außerdem ist die/der Drehfeldmaschine/permanenterregte Elektromotor direkt an einem 2-Stufen-Wechselrichter (nicht gezeigt) angeschlossen.

Ferner umfasst die 6-polig bzw. 6-nutig ausgebildete Jochwicklung 2 jeweils einen inneren Wicklungsteil 21, welcher radial innerhalb des Statorblechs 11 in jeweils einer Wicklungsaufnahme 3 angeordnet ist, und jeweils einen äußeren Wicklungsteil 22, welcher radial außerhalb des Statorblechs 11 an einer Außenoberfläche 4 des Blechpakets 1 angeordnet ist.

Der innere Wicklungsteil 21 und der äußere Wicklungsteil 22 sind über einen Statorrückschluss miteinander verbunden und die jeweilige Wicklungsaufnahme 3 ist als eine Nut ausgebildet. Darüber hinaus ist um den äußeren Wicklungsteil 22 vollumfänglich ein weichmagnetischer Schirm 5 ausgebildet.

Zwischen dem Statorblech 11 und dem weichmagnetischen Schirm 5 sind sechs nichtmagnetische Verbindungselemente 6 angeordnet, welche das Statorblech 11 und den weichmagnetischen Schirmring 5 kontaktieren. Dabei sind die nichtmagnetischen Verbindungselemente 6 aus Kunststoff und jeweils ein nichtmagnetisches Verbindungselement 6 ist zwischen benachbarten Wicklungspolen 7 der Wicklung 2 angeordnet. Außerdem ist das jeweilige nichtmagnetische Verbindungselement 6 beabstandet von den jeweiligen benachbarten Wicklungspolen 7 der Wicklung 2 angeordnet.

Nachdem die nachfolgenden Ausführungen im Wesentlichen die gleichen funktionalen und/oder strukturellen Merkmale aufweisen, wird im Folgenden lediglich auf unterschiedliche Merkmale eingegangen.

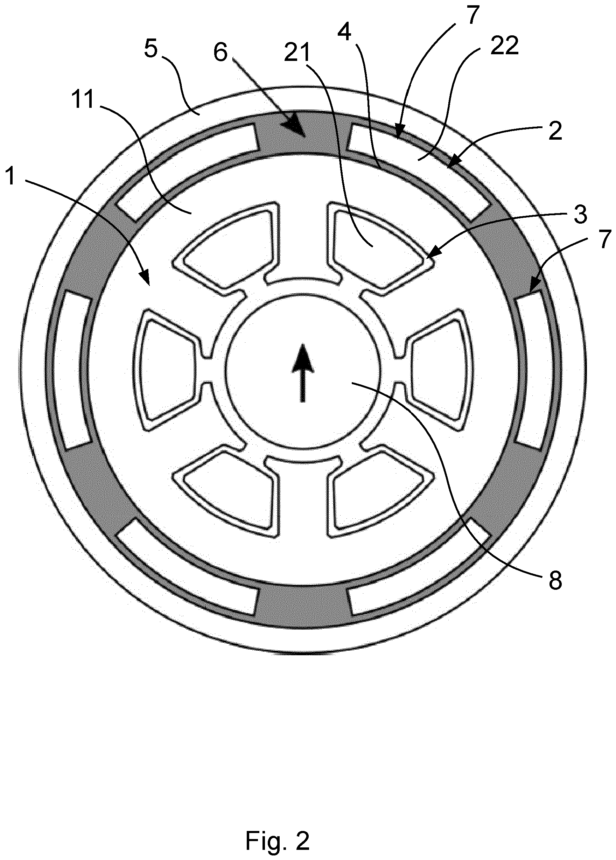

Figur 2 zeigt eine weitere schematische Schnittansicht einer/eines Drehfeldmaschine/permanenterregten Elektromotors mit einem Rotor 8 und einem 6-poligen bzw. 6-nutigen Stator umfassend einen weichmagnetischen Schirm 5 und ein nichtmagnetisches Verbindungselement 6. Die Jochwicklung 2 des Stators ist 6-polig bzw. 6-nutig und das nichtmagnetische Verbindungselement 6 ist ein Verguss, welcher über den jeweiligen äußeren Wicklungsteil 22 ausgebildet ist. Ferner ist die jeweilige Wicklungsaufnahme 3 als eine Nut ausgebildet.

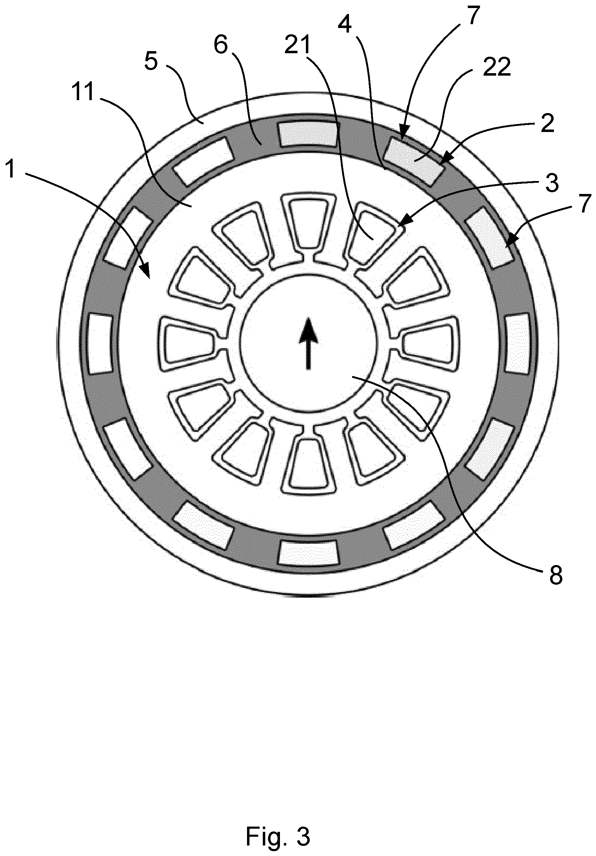

In Figur 3 ist eine schematische Schnittansicht einer/eines Drehfeldmaschine/permanenterregten Elektromotors mit einem Rotor 8 und einem 12-poligen bzw. 12-nutigen Stator umfassend einen weichmagnetischen Schirm 5 und ein nichtmagnetisches Verbindungselement 6 dargestellt. Dabei ist die jeweilige Wicklungsaufnahme 3 als eine Nut und die Jochwicklung 2 des Stators 12-polig bzw. 12-nutig ausgebildet.

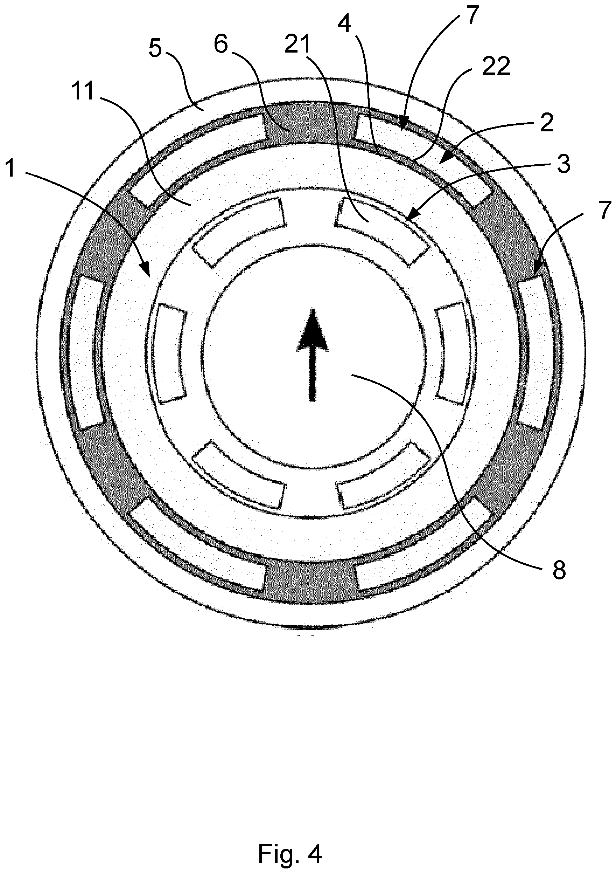

Figur 4 zeigt eine weitere schematische Schnittansicht einer/eines Drehfeldmaschine/permanenterregten Elektromotors mit einem Rotor 8 und einem 6-poligen bzw. 6-nutigen Stator umfassend einen weichmagnetischen Schirm 5 und ein nichtmagnetisches Verbindungselement 6. In der dargestellten Ausführungsvariante ist die Jochwicklung 2 des Stators 6-polig bzw. 6-nutig ausgebildet und das nichtmagnetische Verbindungselement 6 ist ein Verguss, welcher über den jeweiligen äußeren Wicklungsteil 22 ausgebildet ist. Darüber hinaus ist die jeweilige Wicklungsaufnahme 3 ohne eine Nut ausgebildet.

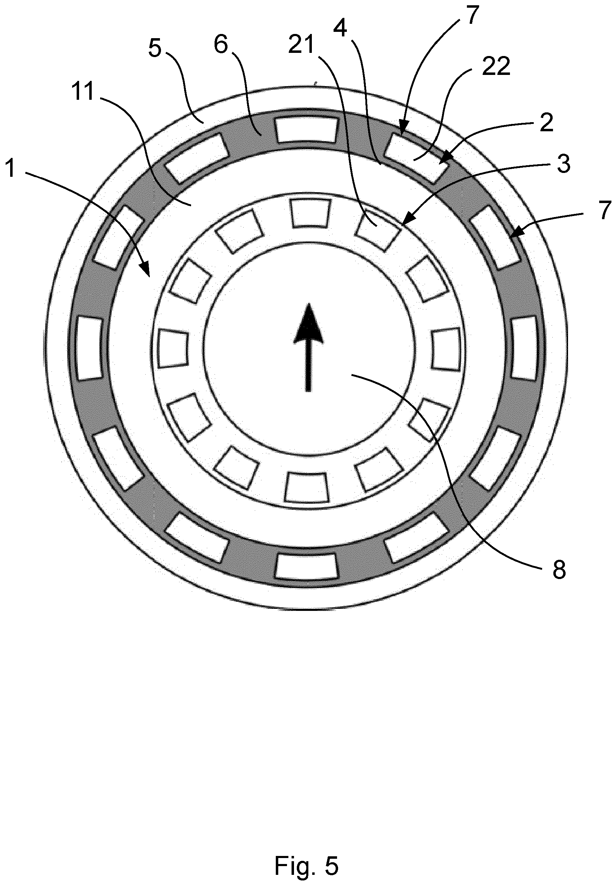

In Figur 5 ist eine weitere schematische Schnittansicht einer/eines Drehfeldmaschine/permanenterregten Elektromotors mit einem Rotor 8 und einem 12-poligen bzw. 12-nutigen Stator umfassend einen weichmagnetischen Schirm 5 und ein nichtmagnetisches Verbindungselement 6 gezeigt. Die Jochwicklung 2 des Stators ist 12-polig bzw. 6-nutig ausgebildet und das nichtmagnetische Verbindungselement 6 ist ein Verguss, welcher über den jeweiligen äußeren Wicklungsteil 22 ausgebildet ist. Darüber hinaus ist die jeweilige Wicklungsaufnahme 3 ohne eine Nut ausgebildet.

Die Erfindung beschränkt sich in ihrer Ausführung nicht auf die vorstehend angegebenen bevorzugten Ausführungsbeispiele. Änderungen und/oder Modifikationen der beschriebenen Ausführungsformen werden als alternative Formen der Erfindung angesehen, sofern sie nicht vom Umfang der Erfindung abweichen, der durch die beigefügten Ansprüche definiert ist.

## Patentansprüche

1. Stator für einen/eine permanenterregten Elektromotor/Drehfeldmaschine mit einem Blechpaket (1) aus Statorblechen (11) und einer Jochwicklung (2),
wobei die Jochwicklung (2) einen inneren Wicklungsteil (21), welcher radial innerhalb des Statorblechs (11) in wenigstens einer Wicklungsaufnahme (3) angeordnet ist, und einen äußeren Wicklungsteil (22), welcher radial außerhalb des Statorblechs (11) an einer Außenoberfläche (4) des Blechpakets (1) angeordnet ist, umfasst,
wobei um den äußeren Wicklungsteil (22) vollumfänglich ein weichmagnetischer Schirm (5) ausgebildet ist,
wobei zwischen dem Statorblech (11) und dem weichmagnetischen Schirm (5) wenigstens ein nichtmagnetisches Verbindungselement (6) angeordnet ist, welches das Statorblech (11) und den weichmagnetischen Schirmring (5) kontaktiert,
**dadurch gekennzeichnet, dass** das wenigstens eine nichtmagnetische Verbindungselement (6) aus Kunststoff ist und jeweils ein nichtmagnetisches Verbindungselement (6) zwischen benachbarten Wicklungspolen (7) der Jochwicklung (2) angeordnet ist,
wobei das jeweilige nichtmagnetische Verbindungselement (6) beabstandet von den jeweiligen benachbarten Wicklungspolen (7) der Jochwicklung (2) angeordnet ist.

2. Stator gemäß Anspruch 1, wobei das Blechpaket (1) einstückig ausgebildet ist.

3. Stator gemäß einem der vorhergehenden Ansprüche,
wobei die wenigstens eine Wicklungsaufnahme (3) als eine Nut ausgebildet ist.

4. Stator gemäß einem der vorhergehenden Ansprüche,
wobei die Jochwicklung (2) 6-polig bzw. 6-nutig ausgebildet ist.

5. Stator gemäß einem der vorhergehenden Ansprüche,
wobei die Jochwicklung (2) 12-polig bzw. 12-nutig ausgebildet ist.

6. Drehfeldmaschine/Permanenterregter Elektromotor mit einem Stator (1) gemäß einem der vorhergehenden Ansprüche,
wobei innerhalb des Statorblechs (11) ein Rotor (8) mit Permanentmagneten angeordnet ist.

7. Drehfeldmaschine/Permanenterregter Elektromotor nach Anspruch 6,
wobei diese direkt an einem 2-Stufen-Wechselrichter angeschlossen ist.

## Claims

1. A stator for a permanently excited electric motor /rotating field machine with a lamination stack (1) of stator laminations (11) and a yoke winding (2),
wherein the yoke winding (2) comprises an inner winding part (21) which is arranged radially inside the stator lamination (11) in at least one winding receptacle (3) and an outer winding part (22) which is arranged radially outside the stator lamination (11) on an outer surface (4) of the lamination stack (1),
wherein a soft magnetic shield (5) is formed fully around the outer winding part (22),
wherein at least one non-magnetic connection element (6) contacting the stator lamination (11) and the soft magnetic shield ring (5) is arranged between the stator lamination (11) and the soft magnetic shield (5),
**characterized in that** the at least one non-magnetic connection element (6) is made of plastics and a respective non-magnetic connection element (6) is arranged between adjacent winding poles (7) of the yoke winding (2),
wherein the respective non-magnetic connection element (6) is arranged spaced apart from the respective adjacent winding poles (7) of the yoke winding (2).

2. The stator according to claim 1, wherein the lamination stack (1) is integrally formed.

3. The stator according to any one of the preceding claims,
wherein the at least one winding receptacle (3) is formed as a groove.

4. The stator according to any one of the preceding claims,
wherein the yoke winding (2) is formed with 6 poles or 6 grooves.

5. The stator according to any one of the preceding claims,
wherein the yoke winding (2) is formed with 12 poles or 12 grooves.

6. A rotating field machine/permanently excited electric motor with a stator (1) according to any one of the preceding claims,
wherein a rotor (8) with permanent magnets is arranged within the stator lamination (11).

7. The rotating field machine/permanently excited electric motor according to claim 6,
wherein it is directly connected to a 2-stage inverter.

## Revendications

1. Stator pour un moteur électrique à excitation permanente/ une machine à induction, comprenant un empilage de tôles (1) composé de tôles statoriques (11) et d'un enroulement de culasse (2),
dans lequel l'enroulement de culasse (2) comprend une partie d'enroulement intérieure (21) qui est disposée radialement à l'intérieur de la tôle statorique (11) dans au moins un logement d'enroulement (3), et une partie d'enroulement extérieure (22) qui est disposée radialement à l'extérieur de la tôle statorique (11) sur une surface extérieure (4) de l'empilage de tôles (1),
dans lequel un blindage (5) magnétique doux est réalisé sur toute la circonférence autour de la partie d'enroulement extérieure (22),
dans lequel au moins un élément de liaison (6) non magnétique est disposé entre la tôle statorique (11) et le blindage magnétique doux (5) et entre en contact avec la tôle statorique (11) et l'anneau de blindage (5) magnétique doux,
**caractérisé en ce que** ledit au moins un élément de liaison (6) non magnétique est composé de matière plastique, et respectivement un élément de liaison (6) non magnétique est disposé entre des pôles d'enroulement (7) voisins de l'enroulement de culasse (2),
dans lequel l'élément de liaison (6) non magnétique respectif est disposé à distance des pôles d'enroulement (7) respectivement voisins de l'enroulement de culasse (2).

2. Stator selon la revendication 1, dans lequel l'empilage de tôles (1) est réalisé d'un seul tenant.

3. Stator selon l'une quelconque des revendications précédentes, dans lequel ledit au moins un logement d'enroulement (3) est réalisé sous forme de rainure.

4. Stator selon l'une quelconque des revendications précédentes, dans lequel l'enroulement de culasse (2) est réalisé avec 6 pôles ou 6 rainures.

5. Stator selon l'une quelconque des revendications précédentes, dans lequel l'enroulement de culasse (2) est réalisé avec 12 pôles ou 12 rainures.

6. Machine à induction/ moteur électrique à excitation permanente, comprenant un stator (1) selon l'une quelconque des revendications précédentes, dans lequel un rotor (8) à aimant permanent est disposé à l'intérieur de la tôle statorique (11).

7. Machine à induction/ moteur électrique à excitation permanente selon la revendication 6, dans lequel celle-ci/celui-ci est connecté(e) directement à un onduleur à deux niveaux.
